# EUROPEAN PATENT APPLICATION

(11) **EP 3 142 004 A1**
(43) Date of publication of application: **15.03.2017**
(21) Application number: 15306407.6
(22) Date of filing: 14.09.2015
(51) Int. Cl.: G06F 9/44, G06F 9/445

(54) **METHOD AND APPARATUS FOR ENABLING ACCESS TO CONFIGURATION ENTRIES**

(71) Applicant: Thomson Licensing, 92130 Issy-les-Moulineaux (FR)
(72) Inventor: Jachalsky, Joern, 30974 Wennigsen (DE); Glaeser, Frank, 30449 Hannover (DE); Weber, Michael, 30559 Hannover (DE)
(74) Representative: Huchet, Anne

(57) **Abstract**

A method, a computer readable storage medium and an apparatus (20, 30) configured to enable access to configuration entries in a configuration system comprising a top level menu with two more menu items. The one or more menu items provide access to lower level menus that allow changing values of configuration entries. A graphical user interface (32) is configured to provide (11) an indication to a user of those lower level menus for which a value of at least one configuration entry deviates from an associated default value.

## Description

### FIELD

The present principles relate to a method and apparatus for enabling access to configuration entries in a configuration system. The present principles further relate to a computer readable storage medium having stored therein instructions enabling access to configuration entries in a configuration system.

### BACKGROUND

In today's technical environments, more and more technical devices can be configured. Examples for configurable devices are mobile phones, computers, cars, cameras, TV sets, household appliances, etc. The user is given the opportunity to configure the device with regard to her or his preferences, allowing the personalization of the device.

The more configuration options are offered, the higher is the achievable level of personalization. This freedom of configuration, however, leads to a new and higher level of complexity that needs to be handled by the user. This situation can be to some extent overwhelming, in particular for devices that are once configured and then used without aiming to alter the settings again.

For various devices, complex menus with multiple hierarchy levels are common. Thus, when the user aims to reconfigure the device, which was once configured according to her or his personal preferences, it is a hard task to remember which of the settings had been changed. The user is in fact confronted with an overstraining number of options. In many cases, the only viable solution is to accept the device's offer to reset all the settings to the so-called factory settings, which are the initial settings the device was shipped with.

This is a completely unsatisfactory situation, because valid settings get lost and the user has to start the configuration and personalization of the device from scratch again. This often is accompanied by a longer phase of learning again how to configure the device and the decision-making process to find reasonable and preferred settings once again.

In US 2009/0300543 A1, there is a user interface giving a visual indication about which values have been changed, who has changed them and which new or amended values have been set. This functionality provides an indication for changes of settings on an option level. The indication is given upon a "mouse over" operation. Furthermore, the values which have been changed before can be highlighted using different color or a different font.

Another interface, which is known from US 2010/0306171 A1, allows a user to restore previous versions of a document. The history of the different version can be displayed in a timeline. Furthermore, the interface offers the possibility to show the changes between the different versions. In other words, there is a track changes mode for the document.

### SUMMARY

It is an object to provide a method, an apparatus and a computer readable storage medium, wherein enhanced access to configuration entries in a configuration system shall be provided.

The object is solved by a method for enabling access to configuration entries in a configuration system comprising a top level menu with one or more menu items, the one or more menu items providing access to lower level menus that allow changing values of configuration entries, the method comprising: providing an indication to a user of those lower level menus for which a value of at least one configuration entry deviates from an associated default value.

The method is based on the following considerations: The configuration system is in particular a configuration system having multiple hierarchy levels. A user of this system frequently aims to answer the following questions when changing the settings of a configurable device: What did I change? What was the default value? Where in the menu, in particular where in the hierarchy, are the settings that I changed? When did I change the settings? What was the order in which I did the changes?

It is one aim of the method to provide the user with information that offer a comprehensive and distinct view, giving the necessary information with respect to the configuration changes that have been applied to the device. The differentiation is always done with respect to the default settings. In other words, the user is provided with an easy to access overview of the parameters, which differ from the default settings.

The configuration system in particular comprises a graphical user interface. Hence, the changes are also provided in a graphical way. For example, by giving an indication of the menu item comprising the lower level menu or menus comprising the value or values which has or have been changed from its or their associated default value(s), the user is given a graphic indication or a path to track down into the menu. Following the highlighted items, she or he is enabled to easily find the changed parameter. It is comparable to "Ariadne's thread" leading the user through the labyrinth of the configuration menu.

Furthermore, the indication, which can be a graphical highlight such as a different color, a different font or any other graphical flag emphasizing for example the respective menu items, provides an intuitive way of giving the user the necessary information.

As a result it is no longer necessary that the user again experiences the unpleasant situation of firstly learning how to configure the device and secondly configure the device from more or less scratch again. Hence, the described method renders the handling of the device significantly more user-friendly. This in particular applies in a situation in which the device is rather rarely configured. By way of an example, the device can be a car, a still picture or video camera, a TV set, a household appliance, a mobile phone, etc. The user is given the opportunity to configure the device with regard to her or his personal preferences and, in addition to this, to allow optimization or reconfiguration of the personalization even after a considerable time of use.

The indication to the user can be provided in various ways. This ranges from a summary of changes in a single overview to the above outlined highlighted menu items in the configuration hierarchy.

A very intuitive way is provided by the following embodiment, according to which the indication is provided to the user by marking those menu items in the top level menu or a lower level menu that provide access to the lower level menus for which a value of at least one configuration entry deviates from an associated default value.

The relevant menu items are in particular marked in a graphical user interface. This is for example realized by highlighting the menu items using a different color or font. However, other means or measures for graphically highlighting the menu items or parameters may likewise be used. For example, blinking or flashing of the menu items or parameters is possible. It is further possible to emphasize the menu item or parameter by a flag or the like.

When a summary of changes is provided, a very comfortable way of giving the user the opportunity to find her or his changed values again is provided. Hence in another embodiment, the indication is provided to the user by providing a menu that enables access to at least one lower level menu for which a value of at least one configuration entry deviates from an associated default value. In one embodiment, the summary of changes is provided by showing in an overview menu only those menu items comprising submenus having a configuration value which deviates from the associated default value.

In other words, the user can directly access the relevant lower level menu or directly an option level showing the changed entry starting from the provided menu. This advantageously allows a fast and comfortable access to the changed values, in particular in complex configuration systems having a high number of hierarchy levels.

Furthermore, in still another embodiment, the default value of the configuration entry of the deviating value is indicated. Frequently, the user desires to know the initial settings of the configurable device. By providing her or him with the information which is the default value for the configuration option, this question can be quickly answered.

Furthermore, in an advantageous embodiment, a visualization of a path through the configuration system's hierarchy of menu levels is indicated, the path ranging from the top level menu to a lower level menu in which the value of the configuration entry deviates from the default value.

A visualization of the path through the configuration system's hierarchy gives a brief and clear summary of where in the configuration system the changes have been carried out. The user is given information with respect to the question in which area or relative to which topic or parameter groups the changes have been made. This is derivable from the path information and it will help the user to remember the amendments.

To give more information with respect to when the changes were made, a timeline of changes is provided. According to another advantageous aspect of the present solution, a history of changes of the configuration entries is recorded.

It is often helpful to have information relative to a point in time when particular changes of the settings have been made. This allows the user to embed the changes in a personal context. She or he might remember, in particular when the device is a personal device such as a car or a mobile phone, in which situation of her or his individual life the changes have been made.

The object is also solved by a method, according to which a plurality of different user views comprising at least two of the following views are provided:
a view comprising marked menu items in the top level menu or a lower level menu indicating that a value of at least one configuration entry in a lower level menu deviates from the associated default value,
a view providing a menu that enables access to at least one lower level menu comprising at least one configuration entry deviating from the associated default value,
a view showing the default value of the configuration entry of the deviating value,
a view showing a visualization of a path through the configuration system's hierarchy of menu levels,
a view showing a history of changes of the configuration entries for values deviating from the default values,
wherein the user is provided a functionality to toggle between the provided views.

The user can select which of the named views suits best her or his personal preferences. The system is therefore very flexible and advantageously user-friendly.

With respect to the above aspects and embodiments, it should be mentioned that in particular the measures are carried out for all the entries having a value that deviates from an associated default value. Furthermore, the method advantageously provides the functionality of indicating the changes in all the menu levels of the configuration system. This means in particular that starting from the top level menu all the lower level menu items are for example highlighted or provided in the visualization of the path through the configuration system's hierarchy. Furthermore, the configuration system has a graphical user interface and all the indications, markings and visualizations of the track through the configuration system are given on this graphical interface, which means in graphical menus.

The object is further solved by a computer readable storage medium having stored therein instructions enabling access to configuration entries in a configuration system comprising a top level menu with one or more menu items, the one or more menu items providing access to lower level menus that allow changing values of configuration entries, wherein the instructions, which when executed by a computer, cause the computer to: provide an indication to a user of those lower level menus for which a value of at least one configuration entry deviates from an associated default value.

The computer readable storage medium is a non-transitory volatile or non-volatile storage medium, such as, for example, but not limited to, a hard disk, an optical or magnetic disk or tape, a solid state memory device, etc. The storage medium thus tangibly embodies a program of instructions executable by a computer or a processing device to perform program steps as described herein.

Same or similar advantages which have been mentioned with respect to the method for enabling access to configuration entries pertain to the computer readable storage medium in the same or similar way and shall therefore not be repeated. The same applies to the advantageous aspects and embodiments of the method.

The object is also solved by an apparatus configured to enable access to configuration entries in a configuration system comprising a top level menu with one or more menu items, the one or more menu items providing access to lower level menus that allow changing values of configuration entries, the apparatus comprising: a graphical user interface configured to provide an indication to a user of those lower level menus for which a value of at least one configuration entry deviates from an associated default value.

Furthermore, the object is also solved by an apparatus configured to enable access to configuration entries in a configuration system comprising a top level menu with one or more menu items, the one or more menu items providing access to lower level menus that allow changing values of configuration entries, the apparatus comprising a graphical user interface, a processing device and a memory device having stored therein instructions, which, when executed by the processing device, cause the apparatus to: on the graphical user interface provide an indication to a user of those lower level menus for which a value of at least one configuration entry deviates from an associated default value.

Also with respect to the apparatus configured to enable access to configuration entries in the configuration system, there are same or similar aspects and advantages applicable, which have been already mentioned with respect to the method according to aspects of the invention. Merely to omit unnecessary explanations and repetitions, these are not mentioned here.

Further characteristics of the present solution will become apparent from the description of the embodiments together with the claims and the included drawings. Embodiments can fulfill individual characteristics or a combination of several characteristics.

### BRIEF DESCRIPTION OF THE DRAWINGS

- Fig. 1: schematically illustrates an embodiment of a method for enabling access to configuration entries in a configuration system;
- Fig. 2: schematically depicts one embodiment of an apparatus configured to enable access to configuration entries in a configuration system;
- Fig. 3: schematically illustrates another embodiment of an apparatus configured to enable access to configuration entries in a configuration system;
- Fig. 4: an example of a configuration menu for a still picture camera;
- Fig. 5: an example of a configuration menu for a car;
- Fig. 6: marked menu items indicating changes of entries, which deviate from their associated default values, on a top level of a configuration system;
- Fig. 7: a marked menu item indicating changes of an entry, which deviates from its associated default value, on a primary sub-level of the configuration system;
- Fig. 8: a marked menu item indicating changes of an entry, which deviates from its associated default value, on a secondary sub-level of the configuration system;
- Fig. 9: a marked menu item indicating changes of an entry, which deviates from its associated default value, on an option level of the configuration system;
- Fig. 10: a summary of changes of top level menu items;
- Fig. 11: a summary of changes on an option level;
- Fig. 12: a view showing a selected value and a default value;
- Fig. 13: a view showing a summary of changed configuration entries together with a visualization of the path through the configuration system's hierarchy of menu levels;
- Fig. 14: a comprehensive view showing selected and default settings together with a visualization of the path through the system's hierarchy; and
- Fig. 15: a summary of changes in a timeline indicating a history of changes of the configuration in entries.

### DETAILED DESCRIPTION OF PREFERED EMBODIMENTS

For a better understanding the principles of some embodiments shall now be explained in more detail in the following description with reference to the figures. It is understood that the described solution is not limited to these exemplary embodiments and that specified features can also expediently be combined and/or modified without departing from the scope of the present principles as defined in the appended claims.

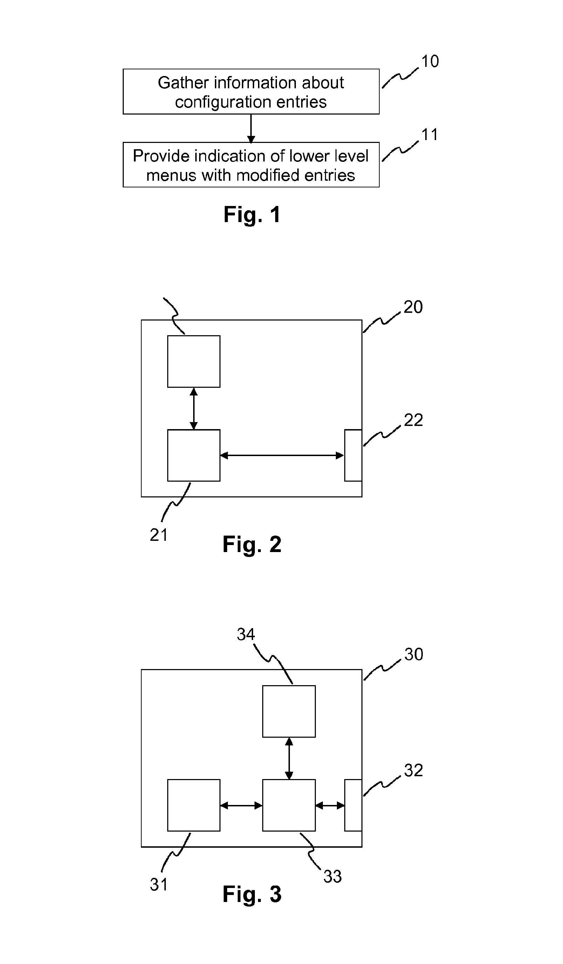

Fig. 1 schematically illustrates one embodiment of a method for enabling access to configuration entries in a configuration system comprising a top level menu with one or more menu items, the one or more menu items providing access to lower level menus that allow changing values of configuration entries. In a first step 10 information about the various configuration entries is gathered by the configuration system. An indication is then provided 11 to a user of those lower level menus for which a value of at least one configuration entry deviates from an associated default value.

One embodiment of an apparatus 20 configured to enable access to configuration entries in a configuration system 21 comprising a top level menu with one or more menu items, the one or more menu items providing access to lower level menus that allow changing values of configuration entries, is schematically depicted in Fig. 2. The apparatus 20 comprises a graphical user interface 22, which is configured to provide 11 an indication to a user of those lower level menus for which a value of at least one configuration entry deviates from an associated default value. The apparatus 20 further comprises a local storage unit 23 for storing the parameters of the configuration entries.

Another embodiment of an apparatus 30 configured to enable access to configuration entries in a configuration system 31 comprising a top level menu with one or more menu items, the one or more menu items providing access to lower level menus that allow changing values of configuration entries, is schematically illustrated in Fig. 3. The apparatus 30 comprises a graphical user interface 32, a processing device 33, and a memory device 34 storing instructions that, when executed by the processing device 33, cause the apparatus 30 to perform steps according to one of the described methods.

For example, the processing device 33 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or a combination thereof.

The local storage unit 23 and the memory device 34 may include volatile and/or non-volatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

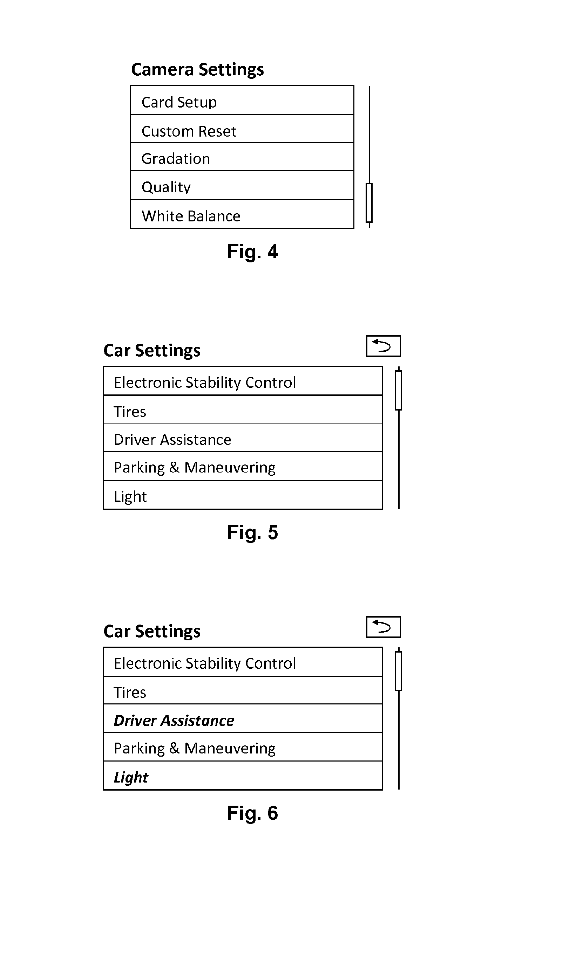

In Fig. 4 there is a graphical user interface of a device having a hierarchical configuration menu with multiple layers. By way of an example, a configuration menu for a still picture camera is depicted. A top level menu named "Camera Settings" is shown. For example, the menu items are: "Card Setup", "Custom Reset", "Gradation", "Quality" and "White Balance". On the right side of the configuration menu, there is a scroll bar to indicate that the list of menu items for the configuration of the still picture camera is in fact longer than the five menu items that are shown in Fig. 4.

In Fig. 5 there is another example for a configuration menu of a configurable device, which is by way of an example a car. The top level menu named "Car Settings" is depicted. This comprises the five menu items: "Electronic Stability Control", "Tires", "Driver Assistance", "Parking & Maneuvering" and "Light". Again, there is a scroll bar on the right side of the menu to indicate that more than the depicted five menu items are in the top level menu. Furthermore, there is a way-back-button on the right top of the shown graphical user interface indicating that the car settings menu can form part of a greater menu structure, for example of a board computer of the car.

For both graphical user interfaces shown in Fig. 4 and Fig. 5, control buttons are omitted merely to reduce the complexity of the drawings.

In the following, by way of an example only, reference will be made to a car as a configurable device having a configuration system with a plurality of menu levels, which are hierarchically organized or nested. Each menu can comprise one or more of a variety of different entries, the values of which can be set to user defined values deviating from an associated default value. In the example given, the car settings contain the menu items listed below in the highest menu level:
- Electronic Stability Control
- Tires
- Driver Assistance
- Parking & Maneuvering
- Light
- Mirrors & Wipers
- Opening & Closing
- Multifunctional Display
- Service
- Factory settings
- Climatronic Settings

Furthermore, just to give an example, it is assumed that the following settings a) to c) were made by a user. In the respective lowest level, the user has hanged a parameter in that it deviates from its default value:
a) Car Settings → Driver Assistance → Lane Assist → Adaptive Lane Guidance,
b) Car Settings → Light → Light Assistance → Lane Change Flash,
c) Car Settings → Open & Closing → Central Locking → Acoustic Confirmation.

In other words, "Car Settings" is the top level menu. The following menus, such as "Driver Assistance" and "Lane Assist", are lower level menus. The last item is the parameter, the value of which is changed from its associated default value. In amendment a), it is the adaptive lane guidance, in amendment b) it is the lane change flash and in amendment c) it is the acoustic confirmation of the central locking.

Figs. 6 to 9 illustrate the indication of changes of entries, which deviate from their associated default values, in the different hierarchy levels of the configuration system.

This starts at the top level menu in Fig. 6, namely the menu "Car Settings". Because of the amendment a), the menu item "Driver Assistance" is marked. By way of an example, this is performed by displaying this menu item in bold and italic letters. The menu items can be highlighted by other, in particular graphic, measures, according to further embodiments not depicted in the figures. For example, there can be a graphic item or flag, the menu item can be displayed blinking or in a different color. Because amendment b) pertains to the menu item "Light", this is also highlighted in the top level menu shown in Fig. 6.

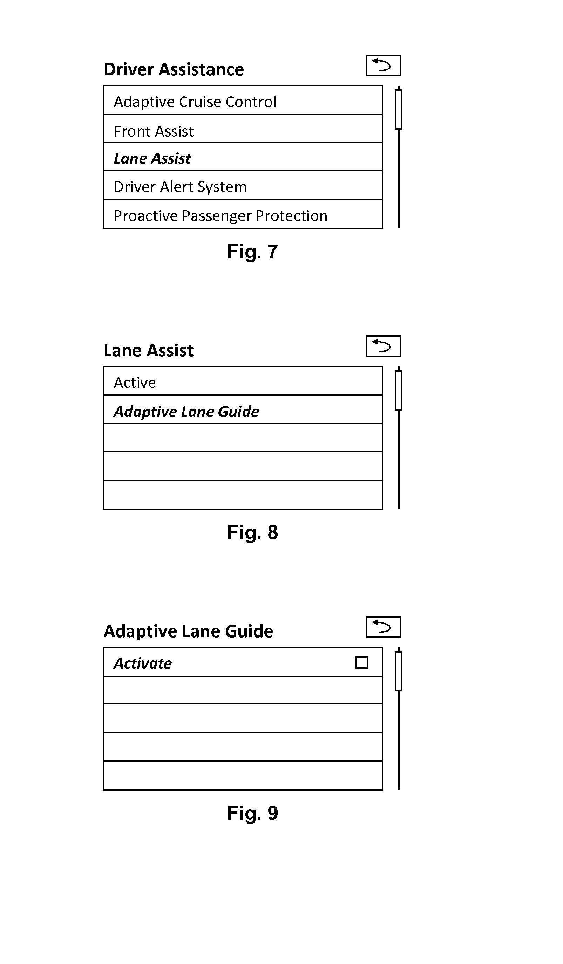

By way of an example, Fig. 7 displays the lower level user interface showing the menu "Driver Assistance". A user can for example enter this menu by activating the soft button labelled "Driver Assistance" in the top level menu "Car Settings". The amendment a) pertains to the adaptive lane guidance. This configuration entry is in the submenu "Lane Assist". This is why the menu item "Lane Assist" is marked in the higher configuration menu "Driver Assistance" shown in Fig. 7.

When the lower level menu "Lane Assist" is entered, the user is shown a graphical user interface, which is for example shown in Fig. 8. In this menu named "Lane Assist", there is the configuration entry "Adaptive Lane Guide", the value of which is changed from its default value. Hence, the menu item "Adaptive Lane Guide" is highlighted in the menu "Lane Assist".

If this submenu is entered, the user enters the option level and is provided with a graphical user interface, which is for example shown in Fig. 9. The tick box behind the menu item "Activate" is not set. The fact that the menu item is highlighted in the bold and italic letters indicates that the default value would be an activation of the adaptive lane guide.

In the above-outlined example, the user is given a graphic indication of a track down into the configuration systems hierarchy of menus down to the parameter, the value of which deviates from its default setting. It is therefore easy for the user to find the parameters which were changed.

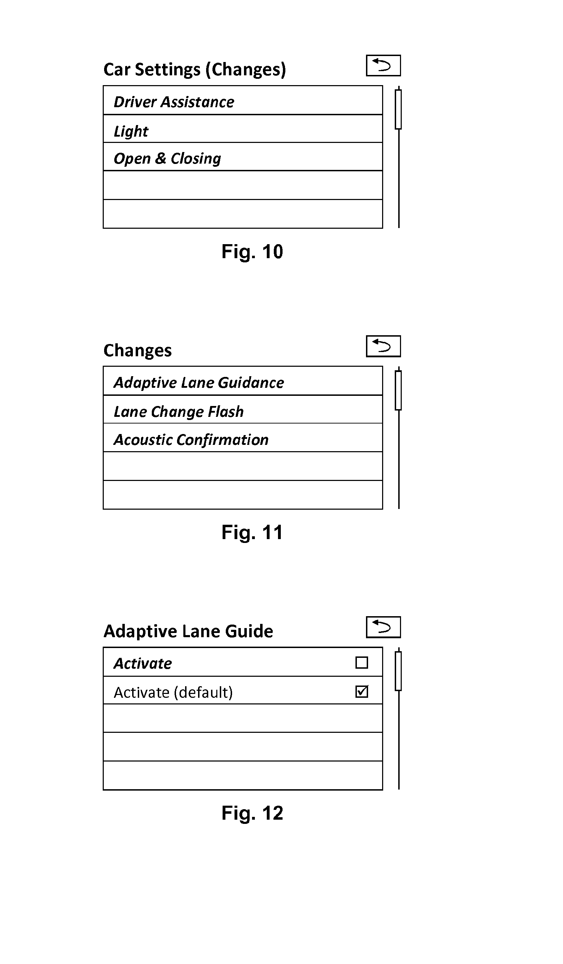

In order to give the user a brief overview of all the changes which were carried out, a summary of changes can be provided. In Fig. 10 there is an example of this graphical representation of the user interface on a top level of the menu items. In other words, the top level menu "Car Settings" is amended in that all menu items normally present in this menu are hidden except for the menu items comprising submenus having a configuration value which deviates from the associated default value. Following the example of the three amendments a) to c) above, the first level menu items are "Driver Assistance", "Light" and "Open & Closing". Hence, the top level menu of Fig. 10 only comprises these three menu items, which can be also highlighted as shown by displaying the items in bold and italic letters. The remaining menu items are hidden.

According to another embodiment of the invention, the summary of changes can be displayed on an option level. This is shown in Fig. 11. By making again reference to the above example of the three amendments a) to c), the parameters which have been changed are: "Adaptive Lane Guidance", "Lane Change Flash" and "Acoustic Confirmation". The configuration entries, similar to the menu items, are also highlighted by displaying them in bold and italic letters.

In other words, it is possible to show the amendments in a nested hierarchical view starting from the highest menu level (see Figs. 6 to 9) or to directly show an overview menu based on the amendments made in lower levels (Fig. 10) or even on the option level (Fig. 12).

To enhance the configuration system or the device or apparatus comprising of having such a system, according to another option, there can be a functionality to toggle between the different views. The user can therefore select the most desirable display format of the changes or preset a preferred view.

Furthermore, in particular for the view on the option level, which is the lowest level, the user might be interested in seeing the default values.

Fig. 12 shows another graphical user interface according to an embodiment of the invention, wherein the parameter "Adaptive Lane Guide" is deactivated. The default value of this parameter is, however, that this is activated. This is indicated by the row below having placed "default" in parenthesis and as a graphical indication the tick box set.

The option of seeing all the changes of the parameters on the lowest level, which can be the option level view given in Fig. 12, there can be the drawback that the context for this option is not immediately evident to the user. This, for example, pertains to the amendment c) relative to "Acoustic Confirmation". An acoustic confirmation is for example an option in the menu item "Central Locking" and also in the menu item "Open & Closing". Hence, the user can select, according to another embodiment of the invention, an overlay view showing the paths through the configuration system's hierarchy, in particular from the top level menu down to the option level. This will help the user to navigate in complex and highly leveled menus and will allow a faster orientation and navigation.

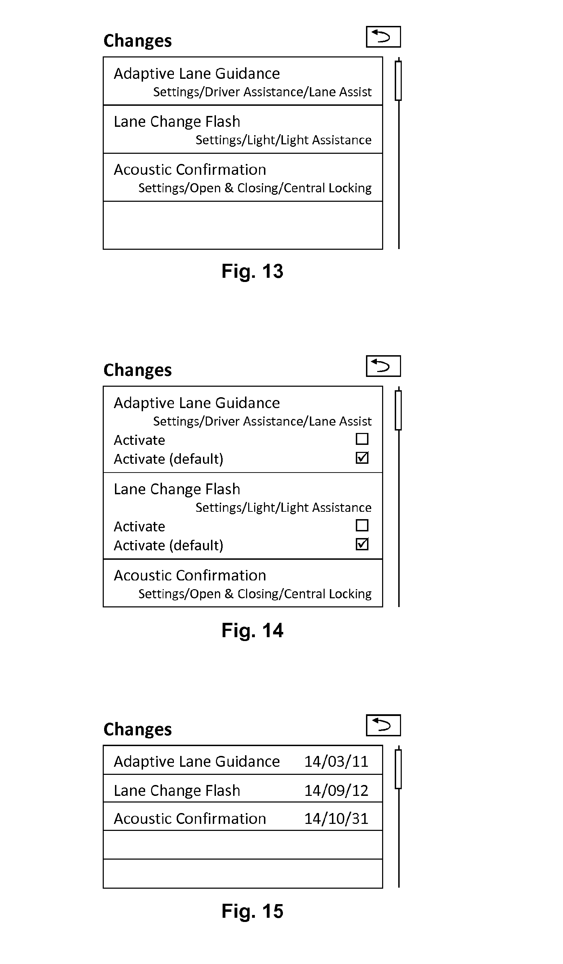

An example of a user interface showing a summary of changed configuration entries together with a visualization of the path through the configuration system's hierarchy is given in Fig. 13. For example, the parameter "Adaptive Lane Guide" is changed and the path stars at the top level menu "Settings" down to the two lower level menus "Driver Assistance" and "Lane Assist".

Furthermore, it can be desirable to provide a kind of "all-in-one view". This special view combines the views given in Figs. 12 and 13, and is shown in Fig. 14. This comprehensive view according to another embodiment of the invention shows selected and default settings together with the visualization of the path through the system's hierarchy. The user can be further provided an option to quickly adapt the settings, for example by clicking on the default value in order to return for this option to the default setting. Moreover, a click on the selected frame can open the corresponding option level view with the list of selectable settings for this particular option.

Finally, the user is provided a menu showing a time line of changes. This embodiment is depicted in Fig. 15. A summary of changes is given in a history of changes for the individual configuration entries. For example, the parameter "Lane Change Flash" was amended on 12.09.2014.

The user can, for example, scroll through this time line using the scroll bar on the right side of the graphical user interface. As each change gets its own entry in the time line (see time stamps shown on the right side) in the order, in which the changes were applied, a quick overview can be obtained.

## Claims

1. A method for enabling access to configuration entries in a configuration system comprising a top level menu with one or more menu items, the one or more menu items providing access to lower level menus that allow changing values of configuration entries, the method **comprising:**
- providing (11) an indication to a user of those lower level menus for which a value of at least one configuration entry deviates from an associated default value.

2. The method according to claim 1, **wherein** the indication is provided (11) to the user by marking those menu items in the top level menu or a lower level menu that provide access to the lower level menus for which a value of at least one configuration entry deviates from an associated default value.

3. The method according to claim 1 or 2, **wherein** the indication is provided to the user by providing a menu that enables access to at least one lower level menu for which a value of at least one configuration entry deviates from an associated default value.

4. The method according to anyone of the previous claims,
**wherein** the default value of the configuration entry of the deviating value is indicated.

5. The method according to anyone of the previous claims,
**wherein** a visualization of a path through the configuration system's hierarchy of menu levels is indicated, the path ranging from the top level menu to a lower level menu in which the value of the configuration entry deviates from the default value.

6. The method according to anyone of the previous claims,
**wherein** a history of changes of the configuration entries is recorded and provided for the values deviating from the default values.

7. The method according to anyone of claims 1 to 6, **wherein** a plurality of different user views comprising at least two of the following views are provided:
- a view comprising marked menu items in the top level menu or a lower level menu indicating that a value of at least one configuration entry deviates in the menu deviates from the associated default value;
- a view providing a menu that enables access to at least one lower level menu comprising at least one configuration entry deviating from the associated default value;
- a view showing the default value of the configuration entry of the deviating value;
- a view showing a visualization of a path through the configuration system's hierarchy of menu levels; and
- a view showing a history of changes of the configuration entries for values deviating from the default values; wherein the user is provided a functionality to toggle between the provided views.

8. A computer readable storage medium having stored therein instructions enabling access to configuration entries in a configuration system comprising a top level menu with one or more menu items, the one or more menu items providing access to lower level menus that allow changing values of configuration entries, wherein the instructions, which when executed by a computer, cause the computer to:
- provide (11) an indication to a user of those lower level menus for which a value of at least one configuration entry deviates from an associated default value.

9. An apparatus (20) configured to enable access to configuration entries in a configuration system (21) comprising a top level menu with one or more menu items, the one or more menu items providing access to lower level menus that allow changing values of configuration entries, the apparatus (20) **comprising:**
- a graphical user interface (22) configured to provide (11) an indication to a user of those lower level menus for which a value of at least one configuration entry deviates from an associated default value.

10. An apparatus (30) configured to enable access to configuration entries in a configuration system (31) comprising a top level menu with one or more menu items, the one or more menu items providing access to lower level menus that allow changing values of configuration entries, the apparatus comprising a graphical user interface (32), a processing device (33) and a memory device (34) having stored therein instructions, which, when executed by the processing device (33), cause the apparatus (30) to:
- provide (11) an indication to a user on the graphical user interface (32) of those lower level menus for which a value of at least one configuration entry deviates from an associated default value.
